# EUROPEAN PATENT SPECIFICATION

(11) **EP 1 604 713 B1**
(45) Date of publication and mention of the grant of the patent: **02.01.2008**
(21) Application number: 05253475.7
(22) Date of filing: 06.06.2005
(51) Int. Cl.: B01D 17/00, B01D 29/90, B04C 3/06

(54) **Fluid flow inlet device**
Einlassvorrichtung für Fluide
Dispositif d'alimentation en fluide

(30) Priority: 07.06.2004 GB 0412648
(43) Date of publication of application: 14.12.2005
(73) Proprietor: Opus maxim limited, New Pond Road Compton, Guildford GU3 1HX (GB)
(72) Inventor: Weir, Nigel Barry, Compton, Guildford GU3 1HX (GB)
(74) Representative: Murnane, Graham John

(56) References cited:
- DE-A1- 4 010 238
- GB-A- 2 259 025
- US-A- 4 316 798
- US-A1- 2003 159 414

## Description

The present invention relates to inlet devices for fluid treatment apparatus. In particular, but not exclusively, the invention relates to inlet devices for fluid separators and the like.

In many applications, it is desirable or necessary to separate a first fluid from a multiphase fluid. Examples of these applications include: introducing a mixed liquid phase, such as oil and water, which contains a gas into a process vessel to release the gas in a controlled manner and promote separation; and introducing a liquid phase which contains a gas into another liquid to release the gas in a controlled manner and promote oil/water separation.

Another common application is introducing a gas containing liquid droplets at high velocity into a process vessel to reduce the velocity of the gas, diffuse the gas, and promote separation of the liquid from the gas. For instance, natural gas contains water in liquid and/or vapour form and it is desirable that this water be removed to prevent the formation of hydrates in transmission lines, minimise corrosion and maximise the calorific value of the gas.

The most common type of separator for separating water from the gas is a glycol contactor. The gas is directed to flow upwards through a tower, typically having a height of between 3 and 10 metres, and the tower containing a number of trays or structured packing which is made from an inert material and which creates a tortuous path for the gas. Glycol is directed in an opposite direction down through the tower to entrain the water contained in the gas. The dehydrated gas is collected at the top of the tower. The hydrated glycol is removed at the base of the tower and is typically recycled, such as by heating of the glycol.

It is known that the inlet device to the separator can significantly affect the performance of the separator. It is desirable that the inlet device should: reduce the flow velocity (according to Stokes law, the velocity of a droplet of one fluid falling or rising through another is proportional to the droplet size); ensure good fluid diffusion; provide some separation of the first fluid from the multiphase fluid; and minimise the shearing or breaking up of the first fluid while delivering the multiphase fluid to the separator.

Simple diverter plates do not adequately perform these functions.
Typically used inlet devices are inlet cyclones or of the vane type.
Conventional inlet devices utilise a diffuser comprising a number of vertical plates of around 1 metre in height and a conduit for conveying the multiphase fluid to the diffuser. The conduit often has a number of apertures adjacent to different vertical portions of the diffuser. However, due to the high velocity and momentum of the fluid, the fluid substantially exits the conduit at the base of the diffuser with little or no flow exiting the apertures provided above. Therefore, only a portion of the available diffusing locations of the diffuser is being utilised and the efficiency of the inlet device is reduced.

The vertical members of the diffuser are typically flat plates which are bent about one longitudinal axis. However, these plates therefore have a number of relatively sharp edges which can shear or break up the first fluid. Also, the cross sectional profile of these plates is aerodynamically poor and can disrupt the flow of the multiphase fluid. Also, being vertical, they do not assist in redirecting the flow of the multiphase fluid.

According to a first aspect of the present invention there is provided a separator for separating a first fluid from a multiphase fluid having an inlet device, said inlet device comprising:
diffusing means having a plurality of diffusing locations;
characterised In that the device further comprises conduit means comprising a plurality of conduits, said conduits being formed as concentric rings having different lengths, each ring defining a flow path, and wherein each flow path conveys the multiphase fluid in the respective conduit to one of the plurality of diffusing locations.

Preferably the diffusing means comprises a single diffuser. Preferably the plurality of diffusing locations comprises a plurality of vertical portions of the single diffuser. Alternatively, the plurality of diffusing locations is provided by a plurality of diffusers.

Preferably, each of the plurality of conduits has a flow area and the flow area of each conduit is substantially equal.

Preferably each of the plurality of conduits is fluidly connected one or more outlet apertures. Preferably the outlet apertures are staggered or longitudinally non-aligned.

Preferably the inlet device includes a support collar. Preferably one or more of the outlet apertures are defined by the support collar.

Preferably the diffusing means comprises a plurality of longitudinal members. Preferably each longitudinal member has a substantially aerodynamic cross section. Preferably each longitudinal member substantially comprises an aerofoil.

Preferably the diffusing means has a conical geometry. Preferably the conical diffusing means has an upper diameter which is smaller than the lower diameter.

According to a second aspect of the present invention there is provided a method of separating a first fluid from a multiphase fluid comprising:
directing the flow of the multiphase fluid along a conduit means comprising a plurality of concentric rings having different lengths, each ring defining a flow path to diffusing means having a plurality of diffusing locations; and
directing each flow path to one of the plurality of diffusing locations.

Preferably the method includes fluidly connecting the plurality of conduits to one or more outlet apertures. Preferably the method includes arranging the outlet apertures in a staggered or longitudinally non-aligned formation.

Preferably the method includes providing a conical diffusing means such that flow of the fluid passing the diffusing means is at least partially redirected.

An embodiment of the present invention will now be described, by way of example only, with reference to the accompanying drawings, in which:
Fig. 1 is a part sectional front view of a separator which includes an inlet device according to the present invention;
Fig. 2 is a sectional side view of the separator of Figure 1;
Fig. 3 is a part sectional front view of a portion of the separator of Figure 1;

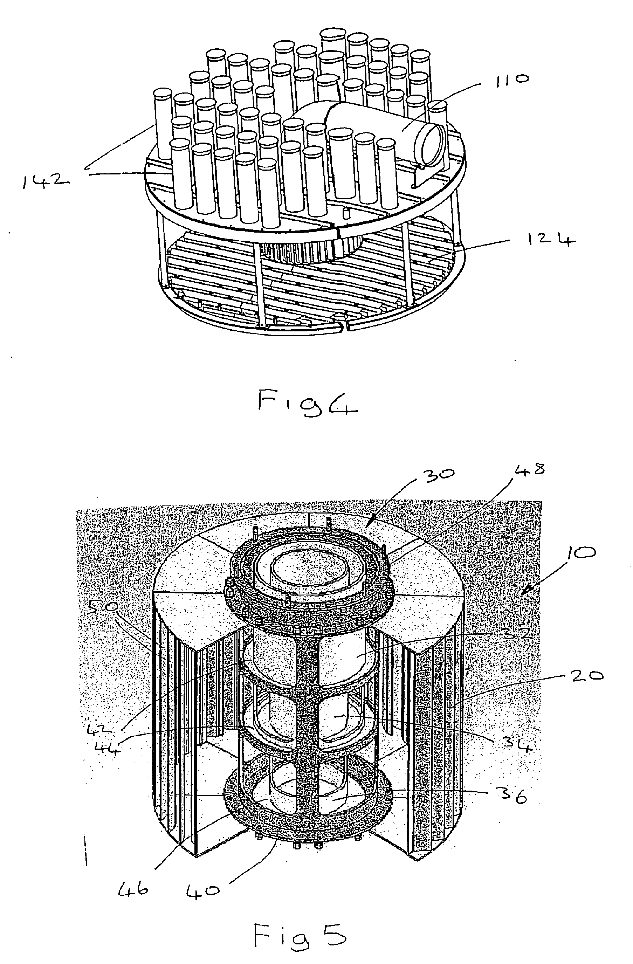

Fig. 4 is a perspective view of a portion of the separator of Figure 1;
Fig.5 is a perspective view of an inlet device according to the present invention with a portion of the diffuser removed for clarity;
Fig. 6 is a plan view of the inlet device of Figure 5;
Fig. 7 is a front view of the inlet device of Figure 5;
Fig. 8 is a sectional side view of the inlet device of Figure 5;
Fig. 9 is a plan view of an alternative embodiment of an inlet device according to the invention;
Fig. 10 is a sectional front view of the inlet device of Figure 9;
Fig. 11 is a side view of the inlet device of Figure 9;

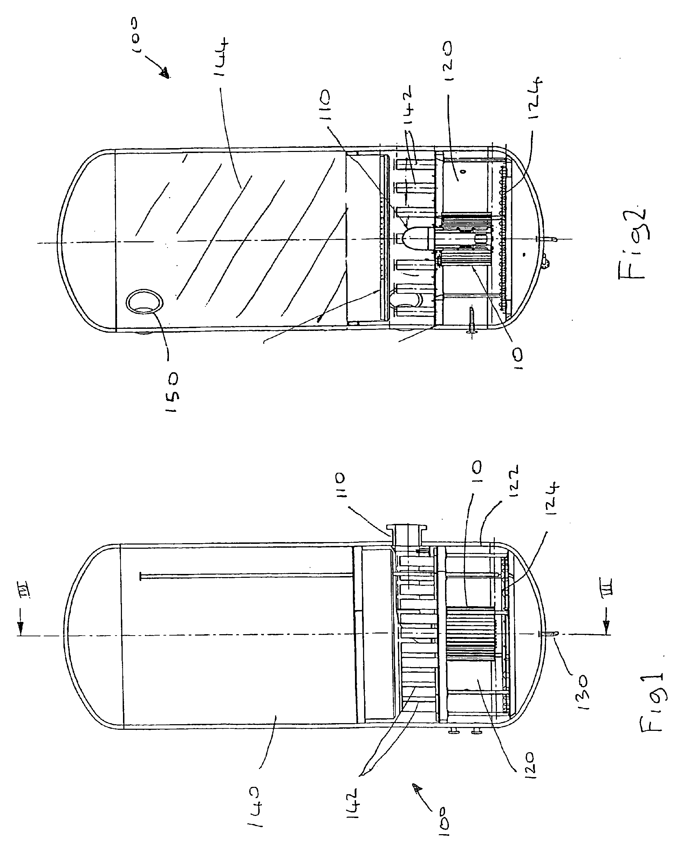

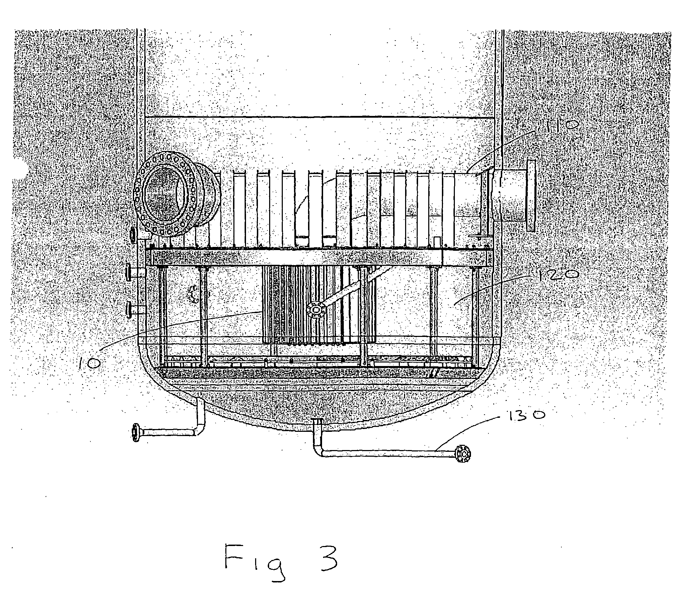

Figures 1 to 3 show an apparatus for separating a first fluid from a multiphase fluid, namely, a glycol contactor 100.

The multiphase fluid in the form of gas containing a first fluid of water enters the glycol contactor 100 via an inlet pipe 110. A hydrocarbon liquid commonly referred to as "condensate" is also contained in the gas.

Fluidly connected to the inlet pipe 110 is an inlet device 10. The inlet device 10 performs a number of functions including decreasing the velocity of the incoming gas and diffusing the gas so that it is dispersed within a first chamber 120. The inlet device 10 also imparts a centrifugal force to the gas, and the water (and condensate) contained within the gas tends to be propelled outwards by the centrifugal effect due to its greater mass. Some of the water (and the condensate) contacts an inner surface 122 of the first chamber 120 where it coalesces. The base of the first chamber 120 is defined by a support grid 124 which allows water (and condensate) to pass to the bottom of the separator where it may be collected from a first output pipe 130.

The gas flows to a second chamber 140 via a number of chimneys 142 which are adapted to allow the flow of gas. Structured packing 144 is provided in the second chamber 140. Meanwhile, glycol is directed from the top to the bottom of the separator 100 for absorbing water contained in the gas. The dehydrated gas is collected from a second output pipe 150 provided near the top of the separator 100.

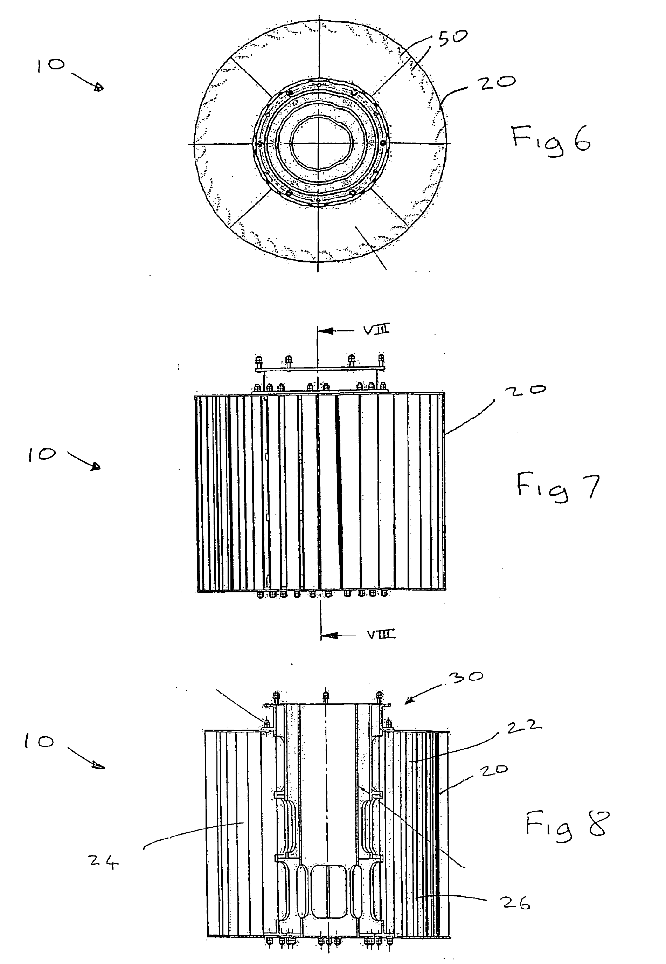

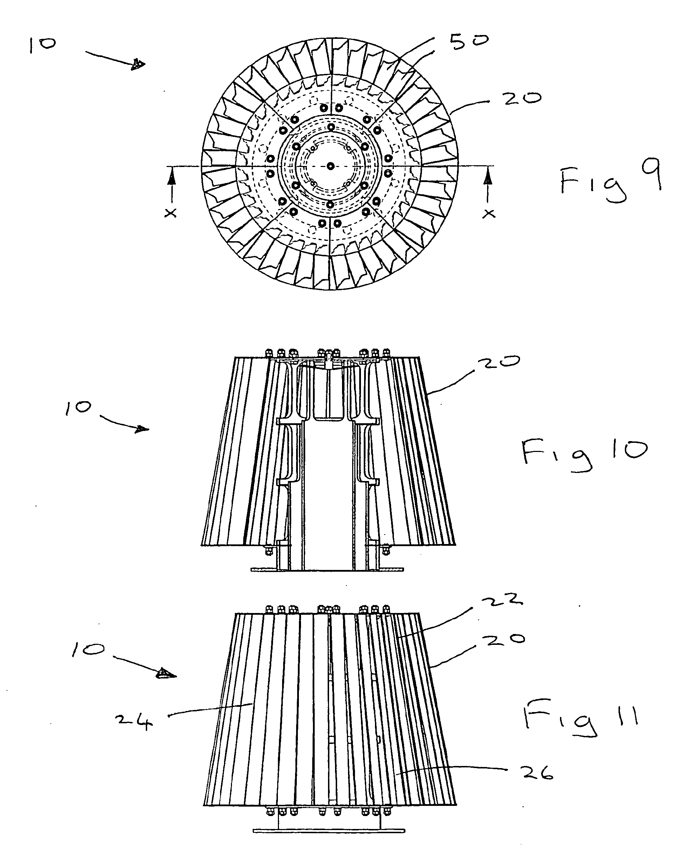

Figures 5 to 8 show the inlet device 10. The inlet device 10 includes diffusing means 20 in the form of a single diffuser 20. The diffuser 20 can be considered to define a plurality of diffusing locations 22, 24, 26 which are provided by different vertical sections of the diffuser 20. However, it should be appreciated that these vertical sections are mechanically connected, fluidly connected and integral with one another.

Conduit means 30 conveys the gas containing water to the diffuser 20. The conduit means 30 comprises three conduits or pipes 32, 34, 36 and each pipe defines a flow path. The pipes are nested within one another and are arranged concentrically. The cross sectional area is such that the area available for flow is substantially equal for each of the pipes.

Each of the pipes are fixed in position and supported by a support collar 40. The support collar 40 also includes a flange 48 for connecting the inlet device to the inlet pipe 110. Each of the pipes have a first end adjacent to the flange 48 but are of different length so that the second end of each pipe is at a different vertical height. The support collar 40 includes annular blocking members 42, 44 which support the ends of the first 32 and second 34 pipes while allowing flow within these pipes. A further blocking member 46 fully covers the end of the third pipe 36.

Each blocking member acts to divert gas which exits the respective pipe. Due to the different lengths of the pipes and the position of each blocking member, gas is directed to three different vertical diffusing locations of the diffuser 20.

The diffuser 20 is formed from a number of longitudinal members or vanes 50. These vanes 50 each have an areo-dynamic cross section to reduce disruption of flow past the diffuser 20.

Figures 9 to 11 show an alternative embodiment of the inlet device 10. The device 10 is identical to the first embodiment other than that the device 10 has a conical geometry with the upper diameter of the device 10 being smaller than the lower diameter. This geometry promotes upward flow of the multiphase fluid as it flows through the device 10.

Various modifications and improvements can be made without departing from the scope of the present invention.

## Claims

1. A separator for separating a first fluid from a multiphase fluid having an inlet device (10), said inlet device comprising:
diffusing (20) means having a plurality of diffusing locations (22,24,26);
**characterised in that** the device further comprises conduit means comprising a plurality of conduits (32,34,36), said conduits being formed as concentric rings having different lengths, each ring defining a flow path, and wherein each flow path conveys the multiphase fluid in the respective conduit to one of the plurality of diffusing locations.

2. A separator as claimed in Claim 1, wherein the diffusing means comprises a single diffuser, and wherein the plurality of diffusing locations comprises a plurality of vertical portions of the single diffuser.

3. A separator as claimed in any one of the preceding claims, wherein each of the plurality of conduits has a flow area and the flow area of each conduit is substantially equal.

4. A separator as claimed in any one of the preceding claims, wherein each of the plurality of conduits is fluidly connected to one or more outlet apertures, and wherein the outlet apertures are staggered or longitudinally non-aligned.

5. a separator as claimed in Claim 4, wherein the inlet device includes a support collar (40), and wherein one or more of the outlet apertures are defined by the support collar.

6. A separator as claimed in any preceding claim, wherein the diffusing means comprises a plurality of longitudinal members (50), and wherein each longitudinal member has a substantially aerodynamic cross section.

7. A separator as claimed in any preceding claim, wherein the diffusing means has a conical geometry.

8. A separator as claimed in Claim 7, wherein the conical diffusing means has an upper diameter which is smaller than the lower diameter.

9. A method of separating a first fluid from a multiphase fluid comprising:
directing the flow of the multiphase fluid along a conduit means comprising a plurality of concentric rings having different lengths(32, 34, 36), each ring defining a flow path to diffusing means (20) having a plurality of diffusing locations (22, 24, 26); and
directing each flow path to one of the plurality of diffusing locations.

10. A method as claimed in Claim 9, including fluidly connecting the plurality of conduits to one or more outlet apertures, and arranging the outlet apertures in a staggered or longitudinally non-aligned formation.

11. A method as claimed in any of Claims 9 or 10, including providing a conical diffusing means such that flow of the fluid passing the diffusing means is at least partially redirected.

## Patentansprüche

1. Eine Trenneinrichtung zum Trennen eines ersten Fluids von einem Mehrphasenfluid, die eine Einlassvorrichtung (10) aufweist, wobei die Einlassvorrichtung Folgendes beinhaltet:
ein Diffundierungsmittel (20), das eine Vielzahl von Diffundierungsstellen (22, 24, 26) aufweist;
**dadurch gekennzeichnet, dass** die Vorrichtung des Weiteren ein Leitungsmittel beinhaltet, das eine Vielzahl von Leitungen (32, 34, 36) beinhaltet, wobei die Leitungen als konzentrische Ringe mit unterschiedlichen Längen gebildet sind, wobei jeder Ring einen Durchflussweg definiert und wobei jeder Durchflussweg das Mehrphasenfluid in die jeweilige Leitung an eine der Vielzahl von Diffundierungsstellen befördert.

2. Trenneinrichtung gemäß Anspruch 1, wobei das Diffundierungsmittel einen Einzeldiffusor beinhaltet und wobei die Vielzahl von Diffundierungsstellen eine Vielzahl von vertikalen Abschnitten des Einzeldiffusors beinhaltet.

3. Trenneinrichtung gemäß einem der vorhergehenden Ansprüche, wobei jede der Vielzahl von Leitungen einen Durchflussbereich aufweist und der Durchflussbereich von jeder Leitung im Wesentlichen gleich ist.

4. Trenneinrichtung gemäß einem der vorhergehenden Ansprüche, wobei jede der Vielzahl von Leitungen mit einer oder mehreren Auslassöffnungen in Fluidverbindung steht und wobei die Auslassöffnungen verschoben oder nicht longitudinal ausgerichtet sind.

5. Trenneinrichtung gemäß Anspruch 4, wobei die Einlassvorrichtung einen Stützkragen (40) umfasst, und wobei eine oder mehrere der Auslassöffnungen durch den Stützkragen definiert werden.

6. Trenneinrichtung gemäß einem der vorhergehenden Ansprüche, wobei das Diffundierungsmittel eine Vielzahl von longitudinalen Elementen (50) beinhaltet, und wobei jedes longitudinale Element einen im Wesentlichen aerodynamischen Querschnitt aufweist.

7. Trenneinrichtung gemäß einem der vorhergehenden Ansprüche, wobei das Diffundierungsmittel eine kegelförmige Gestalt aufweist.

8. Trenneinrichtung gemäß Anspruch 7, wobei das kegelförmige Diffundierungsmittel einen oberen Durchmesser aufweist, der kleiner ist als der untere Durchmesser.

9. Ein Verfahren zum Trennen eines ersten Fluids von einem Mehrphasenfluid, das Folgendes beinhaltet:
Lenken des Durchflusses des Mehrphasenfluids entlang einem Leitungsmittel, das eine Vielzahl von konzentrischen Ringen mit unterschiedlichen Längen (32, 34, 36) aufweist, wobei jeder Ring einen Durchflussweg zu dem Diffundierungsmittel (20) definiert, das eine Vielzahl von Diffundierungsstellen (22, 24, 26) aufweist; und
Lenken jeden Durchflusswegs zu einer der Vielzahl von Diffundierungsstellen.

10. Verfahren gemäß Anspruch 9, das das Herstellen einer Fluidverbindung der Vielzahl von Leitungen mit einer oder mehreren Auslassöffnungen und das Anordnen der Auslassöffnungen in einer verschobenen und nicht longitudinal ausgerichteten Formation umfasst.

11. Verfahren gemäß einem der Ansprüche 9 oder 10, das das Bereitstellen eines kegelförmigen Diffundierungsmittels umfasst, so dass der Durchfluss des Fluids, das an dem Diffundierungsmittel vorbeiführt, zumindest teilweise umgeleitet wird.

## Revendications

1. Un séparateur destiné à séparer un premier fluide d'un fluide multiphasique présentant un dispositif d'entrée (10), ledit dispositif d'entrée comprenant ;
un moyen de diffusion (20) présentant une pluralité d'emplacements de diffusion (22, 24, 26) ;
**caractérisé en ce que** le dispositif comprend de plus un moyen formant conduit comprenant une pluralité de conduits (32, 34, 36), lesdits conduits étant formés en anneaux concentriques ayant des longueurs différentes, chaque anneau définissant une voie d'écoulement, et dans lequel chaque voie d'écoulement achemine le fluide multiphasique dans le conduit respectif vers un emplacement de diffusion parmi la pluralité d'emplacements de diffusion.

2. Un séparateur tel que revendiqué dans la revendication 1, dans lequel le moyen de diffusion comprend un diffuseur unique, et dans lequel la pluralité d'emplacements de diffusion comprend une pluralité de portions verticales du diffuseur unique.

3. Un séparateur tel que revendiqué dans n'importe laquelle des revendications précédentes, dans lequel chaque conduit parmi la pluralité de conduits présente une aire d'écoulement et l'aire d'écoulement de chaque conduit est substantiellement égale.

4. Un séparateur tel que revendiqué dans n'importe laquelle des revendications précédentes, dans lequel chaque conduit parmi la pluralité de conduits est connecté par fluide à une ou plusieurs ouvertures de sortie, et dans lequel les ouvertures de sortie sont échelonnées ou non alignées de façon longitudinale.

5. Un séparateur tel que revendiqué dans la revendication 4, dans lequel le dispositif d'entrée inclut un collet de support (40), et dans lequel une ou plusieurs des ouvertures de sortie sont définies par le collet de support.

6. Un séparateur tel que revendiqué dans n'importe quelle revendication précédente, dans lequel le moyen de diffusion comprend une pluralité d'éléments longitudinaux (50), et dans lequel chaque élément longitudinal a une coupe transversale substantiellement aérodynamique.

7. Un séparateur tel que revendiqué dans n'importe quelle revendication précédente, dans lequel le moyen de diffusion a une géométrie conique.

8. Un séparateur tel que revendiqué dans la revendication 7, dans lequel le moyen de diffusion conique a un diamètre supérieur qui est plus petit que le diamètre inférieur.

9. Une méthode pour séparer un premier fluide d'un fluide multiphasique comprenant :
diriger l'écoulement du fluide multiphasique le long d'un moyen formant conduit comprenant une pluralité d'anneaux concentriques ayant des longueurs différentes (32, 34, 36), chaque anneau définissant une voie d'écoulement vers un moyen de diffusion (20) présentant une pluralité d'emplacements de diffusion (22, 24, 26) ; et
diriger chaque voie d'écoulement vers un emplacement de diffusion parmi la pluralité d'emplacements de diffusion.

10. Une méthode telle que revendiquée dans la revendication 9, incluant la connexion par fluide de la pluralité de conduits à une ou plusieurs ouvertures de sortie, et l'arrangement des ouvertures de sortie en une formation échelonnée ou non alignée de façon longitudinale.

11. Une méthode telle que revendiquée dans n'importe lesquelles des revendications 9 ou 10, incluant la fourniture d'un moyen de diffusion conique de façon que l'écoulement du fluide passant par le moyen de diffusion soit au moins redirigé en partie.
